# EUROPÄISCHE PATENTSCHRIFT

(11) **EP 3 201 250 B1**
(45) Veröffentlichungstag und Bekanntmachung des Hinweises auf die Patenterteilung: **26.12.2018**
(21) Anmeldenummer: 15798316.4
(22) Anmeldetag: 30.09.2015
(51) Int. Cl.: C08G 18/48, C08G 18/62, C08J 3/03, C08G 18/73, C09D 175/04, C08K 7/20, C08K 7/22

(54) **SPERRSCHICHT UND DEREN VERWENDUNG IN BESCHICHTUNGSSYSTEMEN AUF KUNSTSTOFFSUBSTRATEN**
BARRIER LAYER AND USE THEREOF IN COATING SYSTEMS ON PLASTIC SUBSTRATES
COUCHE BARRIÈRE ET SON UTILISATION DANS DES SYSTÈMES DE REVÊTEMENT DE SUBSTATS EN MATIÈRE PLASTIQUE

(30) Priorität: 30.09.2014 DE 102014014098
(43) Veröffentlichungstag der Anmeldung: 09.08.2017
(73) Patentinhaber: Mankiewicz Gebr. & Co. GmbH & Co KG, 21107 Hamburg (DE)
(72) Erfinder: KARL, Hans-Jürgen, 20249 Hamburg (DE)
(86) Internationale Anmeldenummer: PCT/DE2015/000475
(87) Internationale Veröffentlichungsnummer: WO 2016/050231

(56) Entgegenhaltungen:
- US-A1- 2010 120 971

## Beschreibung

Die vorliegende Erfindung betrifft Beschichtungsstoffe zur Herstellung einer Sperrschicht und deren Verwendung in Beschichtungssystemen für Substrate aus Kunststoffen sowie Verfahren zur Herstellung einer Sperrschicht-haltigen Beschichtung.

Bauteile, welche aus Faser-Kunststoffverbundwerkstoffen oder aus Thermoplasten hergestellt sind, weisen in der Regel eine ungleichmäßige, raue Oberfläche auf. Die eingelegten Fasern stehen an der Oberfläche auf und es zeigen sich Poren und Lunker, die bei der Erstarrung von Thermoplasten oder bei der Aushärtung einer duromeren Harzmatrix auftreten. Vor allem im Kanten- und Sichtbereich sind diese Störungen der Oberfläche unerwünscht.

Häufig werden zum Ausbau oder zur Verkleidung von Fahrzeuginnenräumen Bauteile aus Faser-Kunststoffverbundwerkstoff verwendet. Im Folgenden werden Bauteile, welche zum Ausbau oder zur Verkleidung in Innenräumen von Fahrzeugen zum Personentransport eingesetzt werden, als Interieurbauteile bezeichnet. Zur Ausstattung bzw. optischen Gestaltung des Fahrzeuginnenraums werden die sichtbaren Oberflächen der eingesetzten Bauteile mit einem individuellen Dekor versehen. Dabei kann ein Dekor sowohl farbliche Muster als auch dreidimensionale Strukturen der Oberfläche umfassen.

In der Regel müssen Interieurbauteile mit einer mehrschichtigen Grundierung versehen werden, um eine glatte, lackierfähige Oberfläche zu erhalten. Die üblicherweise eingesetzten Beschichtungssysteme bestehen aus zwei Füllerschichten und zwei Decklackschichten. Dadurch hat dieser Aufbau ein hohes Flächengewicht. Das ist besonders nachteilig in Fahrzeugen, bei denen das Gewicht eine Rolle spielt wie zum Beispiel bei Luftfahrzeugen. Ein weiterer Nachteil der üblichen Beschichtungssysteme ist die lange Prozesszeit der Applikationsverfahren, die durch die erforderlichen Ablüft- und Härtungszeiten der einzelnen Schichten bedingt ist. Darüber hinaus müssen die Füllerschichten vor dem Auftrag der jeweils nächsten Schicht geschliffen werden, um eine glatte Oberfläche zu erhalten. Somit sind die bisher üblichen Verfahren sehr arbeitsaufwendig und entsprechend teuer.

Es ist daher Aufgabe der vorliegenden Erfindung, verbesserte Beschichtungen für Kunststoffsubstrate, insbesondere für Substrate aus thermoplastischen Kunststoffen und Substrate aus Faser-Kunststoffverbundwerkstoffen, zur Verfügung zu stellen, die bei einfacherer Handhabung verbesserte Oberflächen, insbesondere glattere Oberflächen, ausbilden. Gelöst wird diese Aufgabe durch Beschichtungsstoffe gemäß Hauptanspruch, durch deren Verwendung in Beschichtungssystemen zur Grundierung gemäß Nebenanspruch sowie durch Beschichtungsverfahren gemäß Nebenanspruch. Bevorzugte Ausführungsformen werden in den Unteransprüchen und der Beschreibung offenbart.

Die der Erfindung zugrunde liegende Aufgabe wird gelöst durch einen Beschichtungsstoff zur Herstellung einer Sperrschicht, der eine hydroxyfunktionelle Bindemittelkomponente und eine isocyanathaltige Härterkomponente aufweist. Die Bindemittelkomponente enthält dabei eine Kombination aus hydroxyfunktionellen, wässrigen Polymerdispersionen, Glashohlkörpern sowie anorganischen Füllstoffen und/oder anorganischen Pigmenten. Beim Aushärten werden die Glashohlkörper und Füllstoffe überraschenderweise ohne größere Störeffekte in eine dicht vernetzte Harzmatrix eingebettet. Es bildet sich eine stabile Beschichtung mit einer sehr glatten Oberfläche aus. Schon mit der Applikation einer einzigen Schicht auf die Oberfläche eines Bauteils wird ein gutes Ergebnis erzielt. Die erfindungsgemäßen Beschichtungsstoffe können daher zum Aufbau von Grundierungen verwendet werden. Die so erhaltenen Grundierungen können ohne weitere Nachbehandlung direkt mit den gewünschten Dekor- und Decklacken lackiert werden. Bei einer Trockenschichtdicke von maximal 50 µm zeigen die erfindungsgemäßen Beschichtungen besonders hohe Beständigkeiten gegenüber mechanischen und chemischen Beanspruchungen.

Erfindungsgemäß enthält die Bindemittelkomponente hydroxyfunktionelle Polymerdispersionen in Wasser mit einem nicht flüchtigem Anteil von 20 bis 60 Gew.-% bezogen auf die Gesamtmasse der Dispersion, bevorzugt 30 bis 50 Gew.-%, besonders bevorzugt 35 bis 45 Gew.-%. Geeignete Polymere sind Polyphenylenether oder Copolymerisate aus fluoriertem Ethylen und Vinylethern. Bevorzugt sind Copolymerisate aus fluoriertem Ethylen und Vinylethern. Die erfindungsgemäßen Polymerdispersionen weisen eine Hydroxylzahl von 60 bis 100 mg KOH/g bezogen auf das Polymer auf, bevorzugt 70 bis 90 mg KOH/g, besonders bevorzugt 75 bis 85 mg KOH/g. Die Polymerdispersion wird in Mengenanteilen von 10 bis 40 Gew.-% bezogen auf das Gesamtgewicht der Bindemittelkomponente eingesetzt, bevorzugt in Mengenanteilen von 15 bis 35 Gew.-%, besonders bevorzugt von 20 bis 30 Gew.-%.

In einer Ausführungsform der Erfindung weisen die Beschichtungsstoffe eine Pigmentvolumenkonzentration von 40 bis 80 %, bevorzugt von 50 bis 70 %, besonders bevorzugt 55 bis 65 % auf. Die Pigmentvolumenkonzentration ist dabei definiert als das Verhältnis des Gesamtvolumens aller festen Teilchen, welche nicht an der Filmbildung beteiligt sind, zum Gesamtvolumen der nichtflüchtigen Anteile.

In einer weiteren Ausführungsform der Erfindung enthält die Bindemittelkomponente 10 bis 30 Vol.-%, bevorzugt 15 bis 25 Vol.-%, besonders bevorzugt 16 bis 20 Vol.-% Glashohlkörper bezogen auf das Gesamtvolumen der Bindemittelkomponente. Geeignete Glashohlkörper sind beispielsweise Glashohlkugeln. Bevorzugt eingesetzt werden dünnwandige, einzellige Glashohlkugeln aus Borosilikatgläsern mit einer Wandstärke von 0,65 bis 0,80 µm, bevorzugt 0,70 bis 0,75 µm. Weiterhin weisen die Glashohlkugeln eine durchschnittliche Partikelgröße von 10 bis 40 µm auf, bevorzugt 13 bis 32, besonders bevorzugt 18 bis 23 µm. Weiterhin weisen sie eine Nenndichte von 0,4 bis 0,5 g/m³ auf, bevorzugt etwa 0,46 g/m³. Bei einer Füllung von 5 % zeigen sie in Wasser einen alkalischen pH-Wert im Bereich von 8 bis 12, bevorzugt von 9 bis 11.

In einer weiteren Ausführung der vorliegenden Erfindung enthält die Bindemittelkomponente 5 bis 40 Gew.-%, bevorzugt 10 bis 30 Gew.-%, besonders bevorzugt 15 bis 25 Gew.-%, anorganische Füllstoffe und/oder anorganische Pigmente bezogen auf das Gesamtgewicht der Bindemittelkomponente.

Geeignete Füllstoffe sind beispielsweise Carbonate wie Kreide, Kalksteinmehl, Calcit, gefälltes Calciumcarbonat, Dolomit und Bariumcarbonat, Sulfate wie Baryt, Blanc fixe und Calciumsulfat, Silikate wie Talkum, Pyrophyllit, Chlorit, Hornblende und Glimmer, Kaolin, Wollastonit, Schiefermehl, gefällte Calciumsilikate, gefällte Aluminiumsilikate, gefällte Calcium-Aluminiumsilikate, gefällte Natrium-Aluminiumsilikate, Feldspäte, Mullit, Kieselsäuren wie Quarz, Quarzgut, Cristobalit, Kieselgur, Kieselerde, gefällte Kieselsäure und pyrogene Kieselsäure, Bimsmehl, Perlit, Calcium-Metasilikate, Fasern aus Schmelzen von Glas oder Basalten, Glasmehl und Schlacken. Erfindungsgemäß bevorzugte Füllstoffe sind gefälltes Calciumcarbonat, Sulfate wie Baryt und Blanc fixe, Silikate wie Talkum, Pyrophyllit, Chlorit, Hornblende und Glimmer. Besonders bevorzugt ist Talkum.

Geeignet Pigmente sind alle bekannten und dem Fachmann geläufigen anorganischen Pigmente wie zum Beispiel Titandioxid, Zinksulfid, Lithopone, basisches Bleicarbonat, basisches Bleisulfat, basisches Bleisilikat, Zinkoxid, Antimonoxid, Eisenoxidgelb, Chromgelb, Cadmiumgelb, Nickeltitangelb, Chromorange, Molybdatorange, Cadmiumorange, Eisenoxidrot, Cadmiumrot, Kupferoxid, Molybdatrot, Ultramarinrot, Mischphasenrot, Mineralviolett, Manganviolett, Ultramarinviolett, Eisenblau, Ultramarinblau, Kobaltblau, Chromoxidgrün, Chromoxidhydratgrün, Ultramaringrün, Mischphasengrünpigmente, Eisenoxidbraun, Mischphasenbraun, Eisenoxidschwarz, Antimonsulfid, Graphit, Gasruß, Thermalruß, Ofenruß, Flammruß oder Acetylenruß. Bevorzugt sind Titandioxid, Zinksulfid, Lithopone, Zinkoxid, Antimonoxid, Eisenoxidgelb, Nickeltitangelb, Molybdatorange, Eisenoxidrot, Kupferoxid, Molybdatrot, Ultramarinrot, Mischphasenrot, Mineralviolett, Manganviolett, Ultramarinviolett, Eisenblau, Ultramarinblau, Kobaltblau, Chromoxidgrün, Chromoxidhydratgrün, Ultramaringrün, Mischphasengrünpigmente, Eisenoxidbraun, Mischphasenbraun, Eisenoxidschwarz, Antimonsulfid, Graphit, Gasruß, Thermalruß, Ofenruß, Flammruß oder Acetylenruß.

In einer bevorzugten Ausführungsform weisen die erfindungsgemäßen Beschichtungsstoffe zusätzlich Flammschutzmittel auf. Für Personentransportfahrzeuge gelten in der Regel Brandschutzbestimmungen, denen die im Innenbereich eingesetzten Interieurbauteile entsprechend müssen. Die Anforderungen an die Entflammbarkeit, Rauchentwicklung und Toxizität der im Brandfall freigesetzten Stoffe werden üblicherweise als FST-Eigenschaften (Flammability, Smoke, Toxicity) bezeichnet. Dabei ist die Flammfestigkeit die Eigenschaft von Werkstoffen, Produkten oder Bauteilen, der Einwirkung von Flammen oder Zündquellen zu widerstehen bzw. die Fähigkeit, auf energetischem, kinetischem, chemischen oder mechanischem Weg die Ausbreitung von Feuer zu verhindern.

In einer bevorzugten Ausführungsform der Erfindung enthält die Bindemittelkomponente 10 bis 40 Gew.-%, bevorzugt 15 bis 35 Gew.-%, besonders bevorzugt 20 bis 30 Gew.-%, Flammschutzmittel bezogen auf das Gesamtgewicht der Bindemittelkomponente. Geeignete Flammschutzmittel sind beispielsweise anorganische Flammschutzmittel, halogen-, stickstoff- oder borhaltige Flammschutzmittel, intumeszierende Flammschutzmittel oder deren Gemische. Bevorzugte Flammschutzmittel sind Hydroxide, Oxid-Hydrate und Phosphate von Mg, Ca, Sr, Ba, Zn und Al, Ammoniumpolyphoshate, Borate wie Bariummetaborat, Calciummetaborat, Natriumtetrafluorborat, Kaliumtetrafluorborat, Zinkborate und Natriumtetraborat Decahydrat, Antimonoxide wie Antimontrioxid und Antimonpentoxid in Kombination mit halogenhaltigen organischen Flammschutzmitteln wie z.B. Decabrombiphenyl, roter Phosphor, Borax und expandierbarer Graphit. Besonders bevorzugte Flammschutzmittel sind Hydroxide, Oxid-Hydrate und Borate von Al, Mg und Zn, Antimonpentoxid in Kombination mit halogenhaltigen organischen Flammschutzmitteln wie z.B. Decabrombiphenyl sowie Mischungen aus zwei oder mehreren der vorgenannten Flammschutzmittel.

Die Härterkomponente des erfindungsgemäßen Beschichtungsstoffs enthält ein oder mehrere Isocyanate. Geeignete Isocyanate sind alle üblicherweise zur Härtung von Beschichtungsstoffen eingesetzte Isocyanate wie zum Beispiel Diphenylmethandiisocyanat (MDI) sowie Oligomere oder Polymere auf Basis von Toluylendiisocyanat (TDI), Diphenylmethandiisocyanat (MDI), Hexamethylendiisocyanat (HDI), Isophorondiisocyanat (IPDI), 4,4'-Diisocyanato-dicyclohexylmethan (HMDI), m-Xylylendiisocyanat (XDI), 1,6-Diisocyanatotrimethylhexan (TMDI) oder Tetramethylxylylendi-isocyanat (TMXDI). Auch Mischungen der genannten Isocyanate sind einsetzbar. Bevorzugte Härter sind Oligomere auf Basis von Hexamethylendiisocyanat (HDI).

Bindemittelkomponente und Härterkomponente werden eingesetzt in einem molaren Verhältnis der OH-Gruppen des Bindemittels zu den NCO-Gruppen des Härters im Bereich von 1 : 0,8 bis 1 : 2,6, bevorzugt von 1 : 1 bis 1 : 2,2 besonders bevorzugt 1 : 1,5 bis 1 : 2.

Weiterhin können die erfindungsgemäßen Beschichtungsstoffe die üblichen und dem Fachmann geläufigen Hilfsstoffe und Additive aufweisen wie beispielsweise Netzmittel, Rheologieadditive oder Haftvermittler. Die Beschichtungsstoffe können dabei bis zu 15 Gew.-% Additive und Hilfsstoffe bezogen auf die Gesamtmasse des Beschichtungsstoffs enthalten.

Die erfindungsgemäße Beschichtung ist insbesondere als Sperrschicht in Beschichtungssystemen zur Grundierung von Kunststoffen und Faser-Kunststoffverbundwerkstoffen geeignet, bevorzugt zur Grundierung von glas- oder kohlefaserverstärkten Kunststoffen. Diese Substrate haben bedingt durch ihre Herstellung besonders unebene, raue Oberflächen. Die bekannten Beschichtungsstoffe müssen in mindestens zwei Schichten appliziert oder aufgebracht werden, um eine lackierfähige Oberfläche zu erhalten. Die erfindungsgemäßen Beschichtungen zeigen schon bei einer einschichtigen Applikation mit einer Trockenschichtdicke von maximal 50 µm sehr glatte Oberflächen, auf welche die üblichen Dekor- und Decklacken appliziert werden können. Aufgrund ihrer sehr glatten Oberfläche sind sie insbesondere auch als Grundierung für Hochglanzlackierungen geeignet.

Gegenüber den bisher als Grundierung eingesetzten Beschichtungssystemen weisen die erfindungsgemäßen Beschichtungssysteme ein erheblich geringeres Gewicht auf. Durch die geringere Anzahl der benötigten Schichten, die jeweils appliziert und ausgehärtet werden müssen, können die erfindungsgemäßen Beschichtungen darüber hinaus auch mit deutlich verkürzten Prozesszeiten hergestellt werden.

Durch die Zugabe von Flammenschutzmitteln zeigen erfindungsgemäßen Beschichtungen, die in Beschichtungssystemen als Sperrschicht eingesetzt werden, ein Brandverhalten und FST-Eigenschaften, die den in der Luftfahrt üblichen Brandschutzanforderungen entsprechen. Weiterhin zeigen die erfindungsgemäßen Oberflächen eine hohe Abriebfestigkeit und Kratzbeständigkeit sowie eine gute Reinigungsfähigkeit. Bevorzugt werden die erfindungsgemäßen Beschichtungen daher auf Oberflächen von Interieurbauteilen appliziert. Solche Bauteile sind zum Beispiel Hatrackklappen, Deckenteile, Stauschränke insbesondere Türen und Seitenwände, Trennwände, Lichtbandabdeckungen (Cove Light Panels), Türen und Türrahmen-Verkleidungen, Handläufe, Bedienungselemente für Passagiere (Passengers Service Unit PSU) und Fensterpaneele. Besonders bevorzugt werden die erfindungsgemäßen Beschichtungen in Beschichtungssystemen zur Dekorierung von Interieurbauteilen aus Kunststoff-Faserverbundwerkstoffen in Monolith- oder Sandwich-Bauweise eingesetzt, wie sie üblicherweise zum Innenausbau in Flugzeugen oder Eisenbahnwaggons verwendet werden.

Die der vorliegenden Erfindung zugrunde liegende Aufgabe wird auch durch ein Verfahren zur Beschichtung von Bauteilen aus Kunststoffen gelöst. Geeignete Kunststoffe sind beispielsweise Thermoplaste wie Polyetheretherketon (PEEK), Polyphenylensulfid (PPS), Polysulfon (PSU), Polyetherimid (PEI) oder Polytetrafluorethen (PTFE). Besonders geeignet sind Hochtemperatur-Thermoplasten. Weiterhin bevorzugt wird das Verfahren zur Beschichtung von Bauteilen aus Faser-Kunststoffverbundwerkstoffen eingesetzt.

Dabei wird in Schritt a das Bauteil vorbereitet, indem die Oberfläche gereinigt, getrocknet und dann angeschliffen wird. Im folgenden Schritt b wird ein erfindungsgemäßer Beschichtungsstoff aufgetragen und getrocknet bzw. ausgehärtet. Im letzten Schritt c des erfindungsgemäßen Verfahrens werden die üblichen Dekor- und Decklacke aufgetragen und getrocknet.

Die zu beschichtenden Bauteile müssen frei von Trennmitteln und anderen Verunreinigungen sein. Dazu können sie vor der Auftragung oder Applikation der ersten Schicht mit Hilfe von Kaltreinigern wie z.B. Isopropanol gereinigt werden. In einer Ausführungsform des erfindungsgemäßen Verfahrens können die Bauteile vor Applikation der ersten Schicht mit einem Leitprimer beschichtet werden. Insbesondere Bauteile, die mit elektrostatischen Applikationsverfahren (ESTA-Verfahren) beschichtet werden sollen wie z.B. Faser-Kunststoffverbundwerkstoffe und hochtemperaturbeständige Thermoplaste, werden mit einem Leitprimer versehen. Als Leitprimer werden dabei Beschichtungen bezeichnet, welche leitfähige Oberflächen erzeugen, wie sie bei den elektrostatischen Applikationsverfahren notwendig sind.

In einer bevorzugten Ausführungsform der Erfindung wird die Bauteiloberfläche vor dem Auftragen der Grundierung gespachtelt, um größere Oberflächendefekte auszugleichen. Insbesondere Bauteile, welche thermoplastische oder duromere Kunststoffe enthalten, weisen häufig Lunker auf. Mit dem Begriff Lunker werden dabei Hohlräume bezeichnet, die beim Erstarren oder Aushärten der Kunststoffharze auftreten. Im Kantenbereich und im Sichtbereich sind diese Oberflächendefekte unerwünscht. Um eine glatte Oberfläche zu erhalten, werden daher Spachtel oder Spachtelmassen auf die Oberfläche aufgetragen, ausgehärtet und anschließend glattgeschliffen. Erfindungsgemäß bevorzugt wird zunächst eine Grobspachtelschicht aufgetragen, ausgehärtet und geschliffen. Anschließend wird eine Feinspachtelschicht aufgetragen, ausgehärtet und geschliffen. Die aufgetragenen Spachtelmassen können dabei beispielsweise durch Konvektionstrockung oder IR-Trocknung ausgehärtet werden. Bei einer Konvektionstrocknung wird die aufgebrachte Spachtelschicht zunächst 5 bis 40 Minuten, bevorzugt 20 bis 35 Minuten, besonders bevorzugt etwa 30 Minuten, bei Raumtemperatur abgelüftet und anschließend bei 50 bis 70 °C, bevorzugt bei etwa 60 °C, für einen Zeitraum von 25 bis 60 Minuten, bevorzugt etwa 30 Minuten, ausgehärtet.

Auf die so vorbereitete Oberfläche wird in Schritt b dann der erfindungsgemäße Beschichtungsstoff zur Herstellung einer Sperrschicht aufgetragen oder appliziert und ausgehärtet. Geeignete Applikationsverfahren sind beispielsweise elektrostatische Applikationsverfahren und pneumatische Druckluftspritzverfahren. In elektrostatischen Applikationsverfahren wird beispielsweise bei 50 mA mit einem Materialdruck von 2,3 bis 25 bar gearbeitet; in pneumatischen Applikationsverfahren wird beispielsweise mit Düsen von 1,1 bis 1,8 mm bei einem Zerstäuberdruck von 3 bis 4 bar gearbeitet. Die in Schritt b erhaltene Beschichtung wird nach dem Aushärten geköpft, beispielsweise mit einem 150er Schleifpapier.

Das im erfindungsgemäßen Verfahren erhaltene Beschichtungssystem weist eine Trockenschichtdicke von 30 bis 50 µm auf. Diese ist deutlich geringer als die mit den herkömmlichen Verfahren erhaltenen Beschichtungen. In einer Ausführungsform des erfindungsgemäßen Verfahrens werden die oben beschriebenen Beschichtungsstoffe, welche zusätzliche anorganische Flammschutzmittel enthalten, eingesetzt. Damit werden brandgeschützte Beschichtungen und Bauteile mit einer Trockenschichtdicke von 30 bis 50 µm erhalten, welche die FST-Anforderungen der Luftfahrt erfüllen. Die üblichen brandgeschützten Beschichtungssysteme, die zur Beschichtung von Interieurbauteilen im Bereich Luftfahrt eingesetzt werden, haben Trockenschichtdicken zwischen 100 und 200 µm. Sie enthalten im Unterschied zu den erfindungsgemäßen Beschichtungssystemen zusätzlich zumindest zwei Brandschutzfüller-Schichten.

### Beispiele

### Beispiel 1

### Zusammensetzung einer erfindungsgemäßen Sperrschicht

### Bindemittelkomponente

| Anteil in Gew.-% | Rohstoff |
|---|---|
| 27,0 | wässrige Polymerdispersion enthaltend Copolymerisate aus fluoriertem Ethylen und Vinylethern mit 40 Gew.-% nichtflüchtigen Anteilen und einer Hydroxylzahl von 85 mg KOH/g bezogen auf das Polymer |
| 13,0 | TiO₂ (Pigmente) |
| 26,5 | Bariumsulfat (Füllstoff) |
| 3,8 | Glashohlkugeln |
| 7,2 | Talkum (Füllstoff) |
| 7,5 | Dispergierhilfsmittel |
| 0,5 | Entschäumer |
| 1,0 | Verdicker |
| 13,5 | Wasser |

### Härterkomponente

| Anteil in Gew.-% | Rohstoff |
|---|---|
| 80,0 | aliphatisches Polyisocyanat auf Basis von HDI |
| 15,0 | Haftvermittler |
| 5,0 | aromatische Kohlenwasserstoffe |

### Beispiel 2

### Zusammensetzung einer erfindungsgemäßen FST-Sperrschicht

### Bindemittelkomponente

| Anteil in Gew.-% | Rohstoff |
|---|---|
| 27,0 | wässrige Polymerdispersion enthaltend Copolymerisate aus fluoriertem Ethylen und Vinylethern mit 40 Gew.-% nichtflüchtigen Anteilen und einer Hydroxylzahl von 85 mg KOH/g bezogen auf das Polymer |
| 13,0 | TiO₂ (Pigmente) |
| 26,5 | Al(OH)₃ (Flammschutzmittel) |
| 3,8 | Glashohlkugeln |
| 7,2 | Talkum (Füllstoff) |
| 7,5 | Dispergierhilfsmittel |
| 0,5 | Entschäumer |
| 1,0 | Verdicker |
| 13,5 | Wasser |

### Härterkomponente

| Anteil in Gew.-% | Rohstoff |
|---|---|
| 80,0 | aliphatisches Polyisocyanat auf Basis von HDI |
| 15,0 | Haftvermittler |
| 5,0 | aromatische Kohlenwasserstoffe |

Probekörper aus verschiedenen Substraten wurden mit den erfindungsgemäßen Beschichtungen versehen und untersucht. Als Substrat A wurden Sandwichpaneele mit einem Wabenkern aus phenolharzgetränktem Papier und mit Deckschichten aus mit Phenolharz imprägnierten Glasfasergewebe eingesetzt. Weiterhin wurden monolithische Glasfaserlaminate, hergestellt aus Phenolharz-imprägnierten Glasfasergewebe, als Substrat B und Aluminiumplatten als Substrat C verwendet. Zur Herstellung der Probekörper wurden Bindemittelkomponente und Härterkomponente im molaren Verhältnis 1 : 1,8 bezogen auf Stoffmengen der OH-Gruppen des Bindemittels und der NCO-Gruppen des Härters vermischt. Die so erhaltene Mischung wurde mittels Sprühapplikation auf die Oberflächen der Substrate A, B und C aufgebracht. Die aufgebrachte Schicht wurde 15 Minuten bei Raumtemperatur abgelüftet und dann 30 Minuten bei 60 °C ausgehärtet. Die ausgehärteten Beschichtungen weisen Trockenschichtdicken von 40 bis 45 µm auf. Die Probekörper A1 und A2 sind aus Substrat A beschichtet mit der Zusammensetzung nach Beispiel 1 und 2. Die Probekörper B1 und B2 sind aus Substrat B beschichtet mit der Zusammensetzung nach Beispiel 1 und 2. Die Probekörper C1 und C2 sind aus Substrat C beschichtet mit der Zusammensetzung nach Beispiel 1 und 2.

Es wurde die Beständigkeiten gegen eine Lösung von 5 Gewichtsprozent des Reinigungsmittels Turco 5948-DPM, (Hersteller: Henkel KG) in Leitungswasser und gegen Isopropanol geprüft. Die Probekörper wurden dazu bei 23°C für 168 Stunden vollständig in die Lösung des Reinigungsmittels oder in Isopropanol eingetaucht gelagert. Danach wurden die Probekörper abgewischt und 24 Stunden bei 23°C und 50% relativer Luftfeuchte konditioniert.

### Bestimmung der Kratzbeständigkeit:

Dabei wurde ein mit einem Gewicht belasteter Ritzstichel, mit der Spitze auf die zu prüfende Beschichtung aufgesetzt und senkrecht auf der zu prüfenden Fläche stehend über die Fläche gezogen. Anschließend wurde visuell beurteilt, ob die geprüfte Beschichtung eine Kratzspur aufweist. Die maximale Masse des Gewichtes, mit dem der Ritzstichel belastet werden kann, ohne dass die Beschichtung bei der Prüfung verletzt wird, ist ein Maß für die Kratzbeständigkeit der Beschichtung.

### Bestimmung der Haftung (Gitterschnitt-Test):

Für einen Gitterschnitt werden sechs parallele Schnitte mit einem Cuttermesser auf der Beschichtung der Probekörper aufgebracht. Die Schnitte in die Beschichtung sind dabei so tief, dass sie bis auf die Substratoberfläche gehen, ohne diese zu verletzen. Anschließend werden sechs weitere parallele Schnitte angebracht, die senkrecht zu den ersten verlaufen und mit diesen ein gleichmäßige Quadrat oder Gitter bilden. Der Rasterabstand beträgt dabei 1 mm. Auf das entstandene Quadrat wird ein Klarschicht- oder Kreppbandstreifen mit einer Klebekraft von 8 bis 10 N/25mm aufgeklebt. Diese wird in einer Zeit von 0,5 bis 1 s in einem Winkel von 60° abgezogen. Dann wird das Gitter bzw. die Beschichtung visuell ausgewertet. Der Gitterschnittkennwert Gt 0 entspricht dabei einer sehr guten Haftfestigkeit, der Kennwert Gt 5 entspricht einer sehr schlechten Haftfestigkeit.

Die Ergebnisse sind in folgenden Tabellen zusammengefasst.

### Haftung

| Probe körper | A1 | B1 | C1 | A2 | B2 | C2 |
|---|---|---|---|---|---|---|
| 168 h bei Raumtemperatur | Gt 0 | Gt 0 | Gt 0 | Gt 0 | Gt 0 | Gt 0 |
| 168 h bei 60° C | Gt 0 | Gt 0 | Gt 0 | Gt 0 | Gt 0 | Gt 0 |
| in Turco-Lösung, 24 h bei 23° C | Gt 0 | Gt 0 | Gt 0 | Gt 0 | Gt 0 | Gt 0 |
| in Isopropanol, 24 h bei 23° C | Gt 0 | Gt 0 | Gt 0 | Gt 0 | Gt 0 | Gt 0 |

### Kratzbeständigkeit

| Beschichtung nach | Beispiel 1 | Bespiel 2 |
|---|---|---|
| 168 h bei Raumtemperatur | 3800 g | 4000 g |
| 168 h bei 60° C | 4000 g | 4000 g |
| in Turco-Lösung, 24 h bei 23° C | 4100 g | 4200 g |
| in Isopropanol, 24 h bei 23° C | 3500 g | 3500 g |

Alle Probekörper zeigen eine unverändert gute Haftung (Gt 0) der Beschichtung auf dem Substrat und eine hohe Kratzbeständigkeit, die auch durch thermische Belastung oder Einwirkung von Chemikalien nicht beeinträchtigt wird.

Probekörper, welche mit der Beschichtung nach Beispiel 2 beschichtet wurden, wurden zusätzlich auf ihr Brandverhalten geprüft. Alle Prüfungen des Brandverhaltens wurden gemäß den Vorschriften der Luftfahrtbundesbehörde der Vereinigten Staaten von Amerika durchgeführt (s. Code of Federal Regulations 14 CFR Ch. I (1-1-92) Federal Aviation Administration, U.S. Department of Transportation).

### Bestimmung der Entflammbarkeit:

Die Entflammbarkeit der Beschichtungen wurde nach Pt. 25 App. F part. I Absatz 5 geprüft. Ein horizontal angeordneter beschichteter Probekörper wurde 60 Sekunden lang mit einem Gasbrenner beflammt. Anschließend wurde die Länge der Strecke bestimmt, auf die Beschichtung abgebrannt war (Brandlänge). Darüber hinaus wurde die Zeitdauer bestimmt, innerhalb der nach dem Entfernen des Gasbrenners die Beschichtung weiter brennt (Nachbrennzeit) oder brennendes Material vom Probekörper abtropft (Nachtropfzeit). Als Probekörper für diese Prüfung wurden Sandwichpaneele A2 und monolithisches Glasfaserlaminat B2 eingesetzt.

### Bestimmung der spezifische Rauchgasdichte:

Die spezifische optische Rauchgasdichte der beim Verbrennen der Beschichtung entstehenden Rauchgase wurde nach Pt. 25 App. F part. V bestimmt. Als Probekörper für diese Prüfung wurden Sandwichpaneele A2 eingesetzt.

### Bestimmung der Rauchgaszusammensetzung:

Die Zusammensetzung der beim Verbrennen der Beschichtungen entstehenden Rauchgase auf toxische Inhaltsstoffe untersucht. Dazu wurde der im Rahmen der oben genannten Prüfung der spezifischen optischen Rauchgasdichte entstehende Rauch untersucht und die Konzentration von Cyanwasserstoff (HCN), Kohlenstoffmonoxid (CO), nitrosen Gasen (NOₓ), Schwefeldioxid (SO₂) Chlorwasserstoff (HCl) und Fluorwasserstoff (HF) im Rauchgas bestimmt. Als Probekörper für diese Prüfung wurden Sandwichpaneele A2 eingesetzt.

### Bestimmung der Wärmefreisetzung:

Die Wärmefreisetzung wurde nach Pt. 25 App. F part. IV bestimmt. Dabei wurde die beim Verbrennen der Beschichtung auftretende der Gesamtwärmefreisetzung sowie die maximal auftretenden Heizleistung gemessen. Als Probekörper für diese Prüfung wurden Sandwichpaneele A2 und Aluminiumplatten C2 eingesetzt.

Die Ergebnisse sind in folgenden Tabellen zusammengefasst.

### Entflammbarkeit

| Probekörper | A2 | B2 |
|---|---|---|
| Brandlänge [mm] | 47 | 25 |
| Nachbrennzeit [s] | 3 | 0 |
| Nachtropfzeit [s] | 0 | 0 |

### Spezifische Rauchgasdichte und Rauchgaszusammensetzung

| Probekörper | A2 |
|---|---|
| spez. Rauchgasdichte | 15 |
| c(HCN) in [ppm] | 2,5 |
| c(CO) in [ppm] | 80 |
| c(NOₓ) in [ppm] | 7 |
| c(SO₂) in [ppm] | 4 |
| c(HF) in [ppm] | 0 |
| c(HCl) in [ppm] | 0 |

### Wärmefreisetzung

| Probekörper | A2 | C2 |
|---|---|---|
| Gesamtwärmefreisetzung in [kW/m²] | 29 | 8 |
| Maximale Heizleistung in [kW min/m²] | 30 | 5 |

## Patentansprüche

1. Beschichtungsstoff zur Herstellung einer Sperrschicht auf Kunststoffsubstraten enthaltend eine hydroxyfunktionelle Bindemittelkomponente und eine isocyanathaltige Härterkomponente, **dadurch gekennzeichnet, dass** die Bindemittelkomponente
- wässrige Polymerdispersionen enthaltend Polyphenylenether oder Copolymerisate aus fluoriertem Ethylen und Vinylethern,
- Glashohlkörper sowie
- anorganische Füllstoffe und/oder anorganische Pigmente aufweist.

2. Beschichtungsstoff nach Anspruch 1 **dadurch gekennzeichnet, dass** die Bindemittelkomponente eine Pigmentvolumenkonzentration von 40 bis 80 %, bevorzugt von 50 bis 70 %, besonders bevorzugt 55 bis 65 % aufweist.

3. Beschichtungsstoff nach Anspruch 1 oder 2, **dadurch gekennzeichnet, dass** die Bindemittelkomponente die Polymerdispersion enthält in Mengenanteilen von 10 bis 40 Gew.-%, bevorzugt 15 bis 35 Gew.-%, besonders bevorzugt 20 bis 30 Gew.-%, bezogen auf das Gesamtgewicht der Bindemittelkomponente.

4. Beschichtungsstoff nach einem der voranstehenden Ansprüche, **dadurch gekennzeichnet, dass** die Polymerdispersion Copolymerisate aus fluoriertem Ethylen und Vinylethern enthält.

5. Beschichtungsstoff nach einem der voranstehenden Ansprüche, **dadurch gekennzeichnet, dass** die Bindemittelkomponente 10 bis 30 Vol.-%, bevorzugt 15 bis 25 Vol.-%, besonders bevorzugt 16 bis 20 Vol.-% Glashohlkörper bezogen auf das Gesamtvolumen der Bindemittelkomponente aufweist.

6. Beschichtungstoff nach einem der voranstehenden Ansprüche, **dadurch gekennzeichnet, dass** die Bindemittelkomponente 5 bis 40 Gew.-% anorganische Füllstoffe und/oder anorganische Pigmente bezogen auf das Gesamtgewicht der Bindemittelkomponente enthält.

7. Beschichtungsstoff nach Anspruch 6, **dadurch gekennzeichnet, dass** die Füllstoffe ausgewählt sind aus der Gruppe enthaltend gefälltes Calciumcarbonat, Baryt, Blanc fixe, Talkum, Pyrophyllit, Chlorit, Hornblende und Glimmer.

8. Beschichtungsstoff nach Anspruch 6, **dadurch gekennzeichnet, dass** die Pigmente ausgewählt sind aus der Gruppe enthaltend Titandioxid, Zinksulfid, Lithopone, Zinkoxid, Antimonoxid, Eisenoxidgelb, Nickeltitangelb, Molybdatorange, Eisenoxidrot, Kupferoxid, Molybdatrot, Ultramarinrot, Mischphasenrot, Mineralviolett, Manganviolett, Ultramarinviolett, Eisenblau, Ultramarinblau, Kobaltblau, Chromoxidgrün, Chromoxidhydratgrün, Ultramaringrün, Mischphasengrünpigmente, Eisenoxidbraun, Mischphasenbraun, Eisenoxidschwarz, Antimonsulfid, Graphit, Gasruß, Thermalruß, Ofenruß, Flammruß und Acetylenruß.

9. Beschichtungsstoff nach einem der voranstehenden Ansprüche, **dadurch gekennzeichnet, dass** die Bindemittelkomponente weiterhin Flammschutzmittel enthält, wobei die Flammschutzmittel ausgewählt sind aus der Gruppe enthaltend Hydroxide, Oxid-Hydrate und Phosphate von Mg, Ca, Sr, Ba, Zn und Al, Ammoniumpolyphoshate, Borate, Antimonoxide in Kombination mit halogenhaltigen organischen Flammschutzmitteln, roter Phosphor, Borax und expandierbarer Graphit.

10. Beschichtungsstoff nach einem der voranstehenden Ansprüche, **dadurch gekennzeichnet, dass** die Härterkomponente Polyisocyanate aufweist ausgewählt aus der Gruppe enthaltend Diphenylmethandiisocyanat MDI sowie Oligomere oder Polymere auf Basis von Toluylendiisocyanat TDI, Diphenylmethandiisocyanat MDI, Hexamethylendiisocyanat HDI, Isophorondiisocyanat IPDI, 4,4'-Diisocyanato-dicyclohexylmethan HMDI, m-Xylylendiisocyanat XDI, 1,6-Diisocyanatotrimethylhexan TMDI, Tetramethylxylylendi-isocyanat TMXDI und deren Gemische.

11. Beschichtungsstoff nach einem der voranstehenden Ansprüche, **dadurch gekennzeichnet, dass** der Beschichtungsstoff Bindemittelkomponente und Härterkomponente in einem molaren Verhältnis von OH-Gruppen des Bindemittels zu NCO-Gruppen des Härters im Bereich von 1 : 0,8 bis 1 : 2,6 aufweist.

12. Verwendung des Beschichtungsstoffs nach einem der Ansprüche 1 bis 11 in einem Beschichtungssystem zur Grundierung der Oberflächen von Kunststoffsubstraten oder Substraten aus Faser-Kunststoffverbundwerkstoffen.

13. Verfahren zur Herstellung eines Beschichtungssystems auf einem Bauteil hergestellt aus Kunststoffen oder Faser-Kunststoffverbundwerkstoffen aufweisend die Schritte
a Vorbereiten der Oberfläche,
b Auftragen und Aushärten eines Beschichtungsstoffs gemäß einem der Ansprüche 1 bis 11 und
c Lackieren.

14. Verfahren nach Anspruch 13, **dadurch gekennzeichnet, dass** der Beschichtungstoff in Schritt b mittels elektrostatischer Applikationsverfahren oder pneumatischer Druckluftspritzverfahren aufgetragen wird.

15. Interieurbauteil aus Kunststoff oder Faser-Kunststoffverbundwerkstoff aufweisend zumindest eine Beschichtung hergestellt aus einem Beschichtungsstoff gemäß einem der Ansprüche 1 bis 11.

## Claims

1. A coating material for producing a barrier layer on plastic substrates comprising a hydroxy-functional binder component and an isocyanate-containing hardener component, **characterised in that** the binder component contains
- aqueous polymer dispersions comprising polyphenylene ethers or copolymers of fluorinated ethylenes and vinyl ethers,
- glass hollow bodies as well as
- inorganic fillers and/or inorganic pigments.

2. A coating material according to claim 1, **characterised in that** the binder component has a pigment volume concentration of 40 to 80%, preferably from 50 to 70%, particularly preferably 55 to 65%.

3. A coating material according to claim 1 or 2, **characterised in that** the binder component contains the polymer dispersion in proportions of 10 to 40 wt .-%, preferably 15 to 35 wt .-%, particularly preferably 20 to 30 wt .-%, based on the total weight the binder component.

4. A coating material according to one of the preceding claims, **characterised in that** the polymer dispersion contains copolymers of fluorinated ethylene and vinyl ethers.

5. A coating material according to one of the preceding claims, **characterised in that** the binder component has 10 to 30 vol.-%, preferably 15 to 25 vol.-%, particularly preferably 16 to 20 vol .-% glass hollow body based on the total volume of the binder component.

6. A coating material according to one of the preceding claims, **characterised in that** the binder component contains 5 to 40 wt.-% of inorganic fillers and/or inorganic pigments based on the total weight of the binder component.

7. A coating material according to claim 6, **characterised in that** the fillers are selected from the group comprising precipitated calcium carbonate, barite, blanc fixe, talc, pyrophyllite, chlorite, hornblende and mica.

8. A coating material according to claim 6, **characterised in that** the pigments are selected from the group consisting of titanium dioxide, zinc sulfide, lithopone, zinc oxide, antimony oxide, iron oxide yellow, nickel titanium yellow, molybdate orange, iron oxide red, copper oxide, molybdate red, ultramarine red, mixed phase red, mineral violet, manganese violet, ultramarine violet, iron blue, ultramarine blue, cobalt blue, chrome oxide green, chromium oxide hydrate green, ultramarine green, mixed phase green pigments, iron oxide brown, mixed phase brown, iron oxide black, antimony sulfide, graphite, gas black, thermal black, furnace black, flame black and acetylene black.

9. A coating material according to one of the preceding claims, **characterised in that** the binder component further contains flame retardants, wherein the flame retardants are selected from the group consisting of hydroxides, oxide hydrates and phosphates of Mg, Ca, Sr, Ba, Zn and Al, ammonium polyphoshate, borates, antimony oxides in combination with halogen-containing organic flame retardants, red phosphorus, borax and expandable graphite.

10. A coating material according to one of the preceding claims, **characterised in that** the hardener component comprises polyisocyanates selected from the group comprising diphenylmethane diisocyanate MDI as well as oligomers or polymers based on tolylene diisocyanate TDI, diphenylmethane diisocyanate MDI, hexamethylene diisocyanate HDI, isophorone diisocyanate IPDI, 4,4'- Diisocyanato-dicyclohexylmethane HMDI, m-xylylene diisocyanate XDI, 1,6-diisocyanatotrimethylhexane TMDI, tetramethylxylylene diisocyanate TMXDI and mixtures thereof.

11. A coating material according to one of the preceding claims, **characterised in that** the coating material binder component and hardener component in a molar ratio of OH groups of the binder to NCO groups of the curing agent in the range of 1:0.8 to 1:2.6.

12. The use of the coating material according to one of claims 1 to 11 in a coating system for priming the surfaces of plastic substrates or substrates made of fibre-plastic composite materials.

13. A method for producing a coating system on a component made of plastics or fibre-plastic composite materials comprising the steps:
a preparing the surface,
b applying and curing a coating material according to one of claims 1 to 11 and
c varnishing.

14. A method according to claim 13, **characterised in that** the coating material is applied in step b by means of electrostatic application method or pneumatic compressed air spraying process.

15. An interior component made of plastic or fibre-plastic composite material having at least one coating produced from a coating material according to one of claims 1 to 11.

## Revendications

1. Matériau de revêtement pour produire une couche de protection sur des substrats en plastique comprenant un composant liant à fonction hydroxy et un composant durcisseur contenant un isocyanate, **caractérisé en ce que** le composant de liaison contient
- des dispersions aqueuses de polymères comprenant des éthers de polyphénylène ou des copolymères d'éthylènes fluorés et d'éthers de vinyle,
- des corps creux en verre ainsi que
- des charges minérales et/ou des pigments minéraux.

2. Matériau de revêtement selon la revendication 1, **caractérisé en ce que** le composant de liaison a une concentration volumique en pigment de 40 à 80%, de préférence de 50 à 70%, de manière particulièrement préférée de 55 à 65%.

3. Matériau de revêtement selon la revendication 1 ou 2, **caractérisé en ce que** le composant de liaison contient la dispersion de polymère dans des proportions de 10 à 40% en poids, de préférence de 15 à 35% en poids, de manière particulièrement préférée de 20 à 30% en poids sur la base du poids total du composant de liaison.

4. Matériau de revêtement selon l'une des revendications précédentes, **caractérisé en ce que** la dispersion de polymère contient des copolymères d'éthylène et d'éthyle vinyliques fluorés.

5. Matériau de revêtement selon l'une des revendications précédentes, **caractérisé en ce que** le composant de liaison contient 10 à 30 % en volume, de préférence 15 à 25 % en volume, de manière particulièrement préférée 16 à 20% en volume de verre creux sur la base du volume total du composant de liaison.

6. Matériau de revêtement selon l'une des revendications précédentes, **caractérisé en ce que** le composant de liaison contient de 5 à 40 % en poids de charges minérales et/ou de pigments inorganiques par rapport au poids total du composant de liaison.

7. Matériau de revêtement selon la revendication 6, **caractérisé en ce que** les charges sont choisies dans le groupe comprenant le carbonate de calcium précipité, la barytine, le blanc fixe, le talc, la pyrophyllite, la chlorite, la hornblende et le mica.

8. Matériau de revêtement selon la revendication 6, **caractérisé en ce que** les pigments sont choisis parmi le dioxyde de titane, le sulfure de zinc, le lithopone, l'oxyde de zinc, l'oxyde d'antimoine, l'oxyde de fer jaune, le nickel titane jaune, le molybdate orange, l'oxyde de fer rouge oxyde, l'oxyde de cuivre, le rouge de molybdate, le rouge outremer, le rouge en phase mixte, le violet minéral, le violet de manganèse, le violet outremer, le bleu de fer, le bleu outremer, le bleu de cobalt, le vert d'oxyde de chrome, l'oxyde de chrome hydraté vert, le vert outremer, les pigments verts en phase mixte, l'oxyde de fer brun, le brun en phase mixte, le noir d'oxyde de fer, le sulfure d'antimoine, le graphite, le noir de gaz, le noir thermique, le noir de four, le noir de flamme et le noir d'acétylène.

9. Matériau de revêtement selon l'une des revendications précédentes, **caractérisé en ce que** le composant liant contient en outre des agents ignifuges, les agents ignifuges étant choisis dans le groupe consistant en hydroxydes, oxydes-hydrates et phosphates de Mg, Ca, Sr, Ba, Zn et Al, polyphoshate d'ammonium, borates, oxydes d'antimoine en combinaison avec des ignifugeants organiques contenant des halogènes, du phosphore rouge, du borax et du graphite expansible.

10. Matériau de revêtement selon l'une quelconque des revendications précédentes, **caractérisé en ce que** le composant durcisseur comprend des polyisocyanates choisis dans le groupe comprenant le diphénylméthane diisocyanate MDI, ainsi que des oligomères ou des polymères à base de toluylène diisocyanate TDI, le diisocyanate de diphénylméthane MDI, le diisocyanate d'hexaméthylène HDI, l'isophorone diisocyanate IPDI, le 4,4'-diisocyanalo-dicyclohexylméthane HMDI, le m-xylylène diisocyanate XDI, le 1,6-diisocyanatotriméthylhexane TMDI, le tétraméthylxylylène diisocyanate TMXDI et leurs mélanges.

11. Matériau de revêtement selon l'une des revendications précédentes, **caractérisé en ce que** le matériau de revêtement contient des composants de liaison et des composants durcisseurs dans un rapport molaire des groupes OH du liant aux groupes NCO de l'agent de durcissement compris dans la fourchette de 1:0,8 à 1:2,6,

12. Utilisation du matériau de revêtement selon l'une des revendications 1 à 11 dans un système de revêtement pour apprêter les surfaces de substrats en matière plastique ou de substrats en matériaux composites à base de fibres et de plastique.

13. Procédé de fabrication d'un système de revêtement sur un composant en matière plastique ou en matériau composite à base de fibres comprenant les étapes suivantes:
a préparation de la surface,
b application et durcissement d'un matériau de revêtement selon l'une des revendications 1 à 11 et
c laquage.

14. Procédé selon la revendication 13, **caractérisé en ce que** le matériau de revêtement est appliqué à l'étape b au moyen d'un procédé d'application électrostatique ou d'un procédé de pulvérisation pneumatique d'air comprimé.

15. Composant intérieur en matière plastique ou matériau composite fibre-plastique ayant au moins un revêtement produit à partir d'un matériau de revêtement selon l'une quelconque des revendications 1 à 11.
